# EUROPEAN PATENT APPLICATION

(11) **EP 1 482 225 A1**
(43) Date of publication of application: **01.12.2004**
(21) Application number: 03380124.2
(22) Date of filing: 26.05.2003
(51) Int. Cl.: F16K 31/08

(54) **IMPULSE-CONTROLLED SOLENOID VALVE**

(71) Applicant: Catalan Gonzalvez, Moisés, 08940 Cornella De Llobregat (Barcelona) (ES)
(72) Inventor: Catalan Gonzalvez, Moisés, 08940 Cornella De Llobregat (Barcelona) (ES)
(74) Representative: Esteban Perez-Serrano, Maria Isabel

(57) **Abstract**

Impulse-controlled plastic-bodied solenoid valve, which permits the control and maintenance of the state of the valve merely by applying an impulse in one or the other direction, to which end it comprises a core (7) which has a fixed part (9), separated by means of a spring from a moveable part of the core, which in turn is formed by a first part of ferromagnetic material (11), followed by a magnetic intermediate part (12), and with a final segment of ferromagnetic material (13), the operating principle being based on the additive or subtractive application of magnetic fields which overcome or not the action of the spring.

## Description

### OBJECT OF THE INVENTION

The present invention relates to an impulse-controlled, plastic-bodied solenoid valve. Valves are devices which serve to regulate the flow of a fluid, by means of an electromagnetically actuated device, which by means of a current act on the passage of the fluid.

The present invention is characterised by its special configuration and design, particularly in that referring to its core whereby it permits the opening and closing actuation on the valve shutter by means of a single impulse, it not being required that said impulse be maintained in order to retain the position adopted by the shutter.

Thus the present invention falls within the ambit of the electromagnetic actuators which regulate the passage of fluid through a pipe, specifically within the plastic-bodied electromagnetic valves and more particularly in the characteristics of the magnetic cores. Being of application in household electrical appliances such as washing machines and dishwashers, as well as in hydro-massage systems.

### BACKGROUND OF THE INVENTION

The equipment employed for the regulation of a fluid through a pipe is implemented by means of an electromagnetic valve, which incorporates a solenoid or coil inside which a core is displaced which serves to depress or release a shutter through the action of a current producing a magnetic field.

However to retain the state of the valve in a determined opened or closed position, it is necessary to supply a current to the solenoid continuously, since in the event of ceasing to supply said current, the magnetic field produced by the coil vanishes and so too the displacement force acting on the core, the latter recovering its original position through the action of a spring or the like, whereby the valve returns to its original open or closed position, since no force whatever is applied to the gate.

This situation implies a continuous consumption of power to retain the valve in a determined position, whereby the valve power is considerably reduced through the continuous consumption of energy in order to retain it in a determined position.

Valve control systems are known such as those disclosed in the patents JP6341559 and JP20002408838 but in no case do the systems disclosed overcome the drawbacks described above.

Thus, the objective of the present invention is to overcome the preceding drawbacks of continuity in the supply of energy to the solenoid in order to be able to retain the valve in the desired position, developing to this end a plastic-bodied solenoid valve in which a single impulse in a determined direction manages to change the situation of the valve and that it is retained in said position without having to supply energy continuously to the solenoid.

### DESCRIPTION OF THE INVENTION

The invention proposed of impulse-controlled plastic-bodied valve consists basically in the development of a solenoid which has a specially designed core so that it is capable on application of a determined impulse of changing the state of the valve and retaining it in said state without requiring the provision of any energy, until an impulse is received in the opposite direction whereby the valve state would be changed.

The essential feature of the invention consists in a core which has a fixed part of ferromagnetic material, separate from another part of the core which is moveable under the action of a spring. The part of the core which is moveable consists in turn of three segments, separate but physically arranged joined to each other. It has a first segment of ferromagnetic material, followed by another magnetic segment, which thereafter has a final segment of ferromagnetic material.

The dimensions of the fixed and moveable segments of the core, as well as of the parts that comprise the moveable core, the coefficient of elasticity of the spring, and the separation between the parts of the core are gauged so that without any excitation whatsoever, by the action of the spring, the moveable part of the core adopts the position furthest removed from the fixed part of the core and therefore pressing on the shutter of the valve, closing it.

In the event of an impulse such that the magnetic field created inside the former of the solenoid is superimposed upon and is in the same direction as the field of the magnetic segment of the moveable core, then the resulting field is much greater, the force of attraction between the fixed and moveable parts being greater, and given that it has all been designed so that the resistance of the spring is overcome, the moveable assembly of the core is displaced toward the fixed part, releasing the shutter from the pressure applied by said moveable part. The moveable part will remain in said position even in spite of the impulse having ceased, since given the proximity of the fixed and moveable parts, the force of attraction between the two parts is greater than the recoil strength of the spring, adopting a position of equilibrium not previously attainable, and having been achieved by means of an impulse.

The moveable core will be retained in said position until an impulse in the opposite direction is applied across the solenoid winding so that the magnetic field now resulting instead of being strengthened is weakened whereby the recoil strength of the spring is greater than the magnetic attraction, the moveable part of the core recovering its position, which is that of the valve being closed.

This procedure and mechanism for control of the valve by impulses is applicable to plastic-bodied valves and the direction or position adopted by the same is unimportant, it permits a clear saving of energy and an increase in the power which the valves can develop.

This valve can have one inlet and one or more outlets with one or more internal intercommunicating cavities.

### DESCRIPTION OF THE DRAWINGS

To complete the description that is made below and with the object of assisting in a better understanding of the characteristics of the invention, attached to the present descriptive specification, as an integral part thereof, is a set of drawings wherein by way of illustration and not restrictively, the most significant features of the invention have been represented.

Figure 1 shows a representation wherein a general view in perspective of a typical valve is observed.

Figure 2 shows in a schematic and partly sectioned view, a valve such as that which is object of the invention.

Figure 3 shows a representation of the core of the valve with no impulse actuation whatever and in which the valve is in the closed position.

Figure 4 shows a representation of the core of the valve wherein the part moveable through the action of an impulse has been displaced, being retained in said position.

### PREFERRED EMBODIMENT OF THE INVENTION

In the light of the aforementioned figures, a preferred mode of embodiment of the proposed invention is described below.

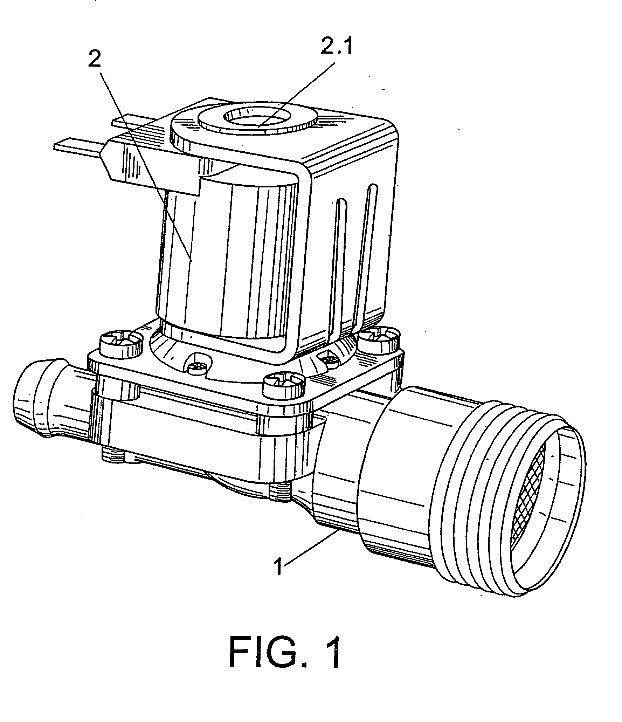

In figure 1 a body of the valve (1) is observed on which is mounted the control and regulating means of the state of the valve, based on a solenoid or coil (2), which has a central part (2.1) wherein is housed a core which is displaced by the action of the magnetic field, produced by the current which flows through the coil.

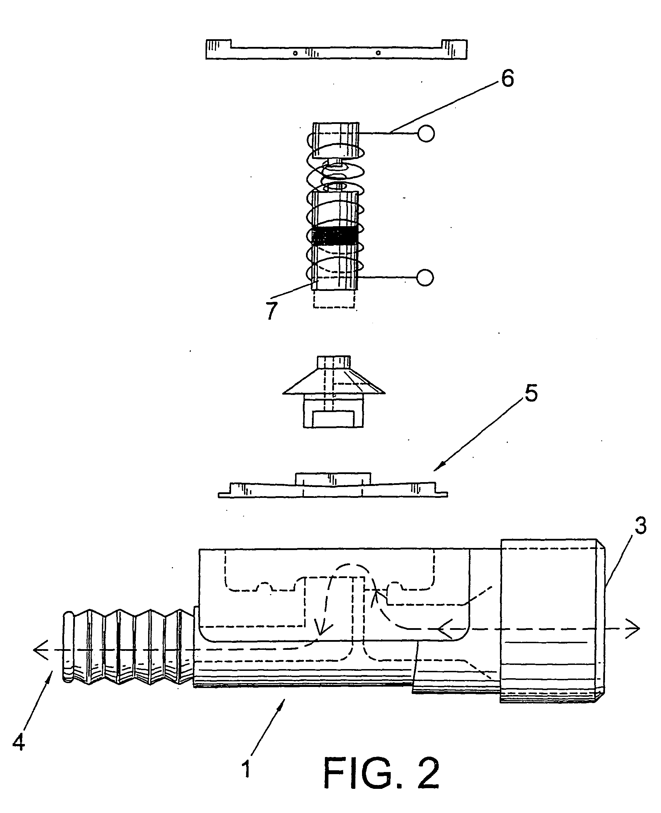

In figure 2 can be seen how the body of the valve (1) has an inlet (3) and an outlet (4) internally communicated, it being possible to have various outlets with one or more internal cavities communicating with each other. Over the cavity that intercommunicates the inlet and the outlet, a shutter (5) is mounted which is depressed by the action of the core (7) displaced by the action of the magnetic field produced in the winding (6).

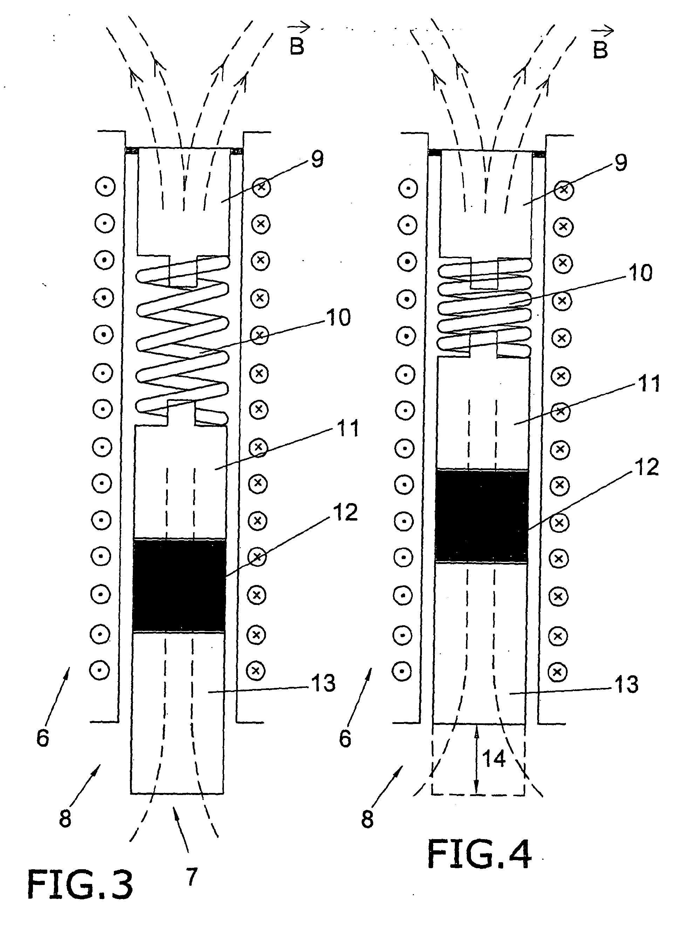

In figure 3 the winding (6) is shown arranged on a former (8) which in its central part houses the core (7), which comprises a fixed part (9) of ferromagnetic material, and therefore suffers no displacement whatsoever, separate from said fixed part (9) is the moveable part. The separation is achieved by means of a spring (10). The moveable part comprises a first segment (11) of ferromagnetic material, followed by another intermediate part (12) of magnetic material, and finished in a final segment (13) of ferromagnetic material. These three parts which constitute the moveable part are independent but remain joined together.

Prior to the application of an impulse to the winding (6), the magnetic field B created by the intermediate magnetic part (12), is not sufficiently strong to overcome the strength of the spring (10) whereby it remains in the position shown maintaining the valve closed. On application of an impulse the displacement of the moveable part of the core is produced, as illustrated in figure 4. Now the magnetic fields of the magnetic intermediate segment (12) and the field produced by the coil (6) due to the impulse add together, the force of attraction between the fixed and moveable parts of the core being much greater, overcoming the resistance of the spring (10) and remaining attracted. Said position, even in spite of the disappearance of the magnetic field produced by the coil, is maintained since the force of attraction is greater than the recoil strength of the spring (10).

In order to displace the spring in the opposite direction, it is sufficient to apply an impulse in the opposite direction across the coil, which will produce a magnetic field in opposition to the magnetic field of the magnetic intermediate part (12), the two fields subtracting, the recoil strength of the spring (10) now being greater than the force of attraction between the fixed part and the moveable part of the core.

The impulses necessary for the operation and control of the state of the valve need not surpass two hundredths of a second.

This system is therefore of application with DC currents. The entire assembly has been designed so that the dimensions, sizes, distances, and forces of repulsion are such as to permit an operation as explained above.

It is not considered necessary to extend this description further for an expert in the matter to comprehend the scope of the invention and the benefits which derive therefrom.

The materials, form, size and arrangement of the elements will be capable of variation provided they do not alter the essential nature of the invention.

The terms in which this specification has been written are to be taken always in their broadest sense and never restrictively.

## Claims

1. Impulse-controlled plastic-bodied solenoid valve, which comprises a plastic body and a solenoid for control and regulation of the valve, **characterised in that** the states of the valve are changed merely by applying an impulse in one or the other direction incorporating for this a core which has a fixed part and a moveable part separated from each other by means of a spring.

2. Impulse-controlled plastic-bodied solenoid valve, according to claim 1, **characterised in that** the moveable part has a first ferromagnetic segment, followed by magnetic intermediate segment and a final ferromagnetic segment, which are separate from each other but physically arranged together.

3. Impulse-controlled plastic-bodied solenoid valve, according to claim 2, **characterised in that** in the event of an impulse applied across the solenoid the moveable part of the core is drawn towards the fixed part remaining in said position despite the disappearance of the impulse, and to produce the return of the moveable part to the original position, it is sufficient to apply an impulse in the opposite direction.

4. Impulse-controlled plastic-bodied solenoid valve, according to claim 1, **characterised in that** the impulse need not be greater than two hundredths of one second.
